# EUROPÄISCHE PATENTSCHRIFT

(11) **EP 2 379 381 B1**
(45) Veröffentlichungstag und Bekanntmachung des Hinweises auf die Patenterteilung: **26.02.2020**
(21) Anmeldenummer: 09774639.0
(22) Anmeldetag: 11.12.2009
(51) Int. Cl.: B60T 8/32

(54) **BREMSANLAGE EINES SCHIENENFAHRZEUGS MIT KOMPENSATION VON SCHWANKUNGEN DER REIBBEDINGUNGEN**
BRAKE SYSTEM OF A RAIL VEHICLE WITH COMPENSATION OF FLUCTUATIONS OF THE FRICTION CONDITIONS
SYSTÈME DE FREINAGE DE VÉHICULE FERROVIAIRE À COMPENSATION DES VARIATIONS DES CONDITIONS DE FROTTEMENT

(30) Priorität: 19.12.2008 DE 102008063892
(43) Veröffentlichungstag der Anmeldung: 26.10.2011
(73) Patentinhaber: KNORR-BREMSE Systeme für Schienenfahrzeuge GmbH, 80809 München (DE)
(72) Erfinder: NOCK, Marco, 85622 Feldkirchen (DE)
(74) Vertreter: Mattusch, Gundula
(86) Internationale Anmeldenummer: PCT/EP2009/008873
(87) Internationale Veröffentlichungsnummer: WO 2010/069520

(56) Entgegenhaltungen:
- DE-A1- 10 248 852
- DE-A1-102006 058 882
- DE-C1- 10 245 207

## Beschreibung

Die Erfindung geht aus von einem Schienenfahrzeug beinhaltend eine Bremsanlage gemäß dem Oberbegriff von Anspruch 1 sowie von einem Verfahren zur Steuerung einer Bremsanlage eines Schienenfahrzeugs gemäß dem Oberbegriff von Anspruch 3.

Eine Bremsanlage eines Schienenfahrzeugs ist beispielsweise aus der DE 102 45 207 C1 bekannt. Bei solchen Bremsanlagen schwanken die Reibbedingungen zwischen Rad oder Radsatz und Schiene bzw. zwischen den Bremsscheiben und den zugeordneten Bremsbelägen abhängig von der Witterung, Umgebungstemperatur, Verschleißzustand und Belastungsprofil teilweise erheblich. Weiterhin sind diese Reibbedingungen auch entlang eines Schienenfahrzeugs bzw. entlang eines Zuges aus Schienenfahrzeugen nicht konstant. Zur Begrenzung des Einflusses der Reibbedingungen auf die erzeugbaren bzw. übertragbaren Bremskräfte werden insbesondere bei Bremsbelägen sehr enge Toleranzen hinsichtlich Form- und Maßhaltigkeit, Materialzusammensetzung, Steifigkeit etc. vorgeschrieben, was entsprechend hohe Kosten verursacht.

In der gattungsgemäßen DE 10 2006 058882 A1 wird eine Vorrichtung zum Erfassen einer zwischen einem Reibbelag und einer relativ zu diesem beweglich angeordneten Bremsscheibe auftretenden Normalkraft und einer vermittelt über die Normalkraft zwischen dem Reibbelag und der Bremsscheibe bewirkten Reibkraft beschrieben Mit Hilfe der ermittelten Reibkraft, welche der Bremskraft entspricht, wird dann eine Regelung der Bremskraft durchgeführt. Dies beinhaltet den Fall, dass die bei gegenüber einer gemessenen, und gegenüber einer Soll-Bremskraft größeren Ist-Bremskraft die Ist-Bremskraft im Rahmen der Bremskraftregelung reduziert wird, um sie an die Soll-Bremskraft zuzupassen. Eine solche Vorgehensweise eignet sich zwar für Fälle, in denen die zu hohe Ist-Bremskraft beispielsweise auf einen zu hohen Bremsdruck durch eine entsprechende (Fehl-)Schaltung elektromagnetischer Ventile entstanden ist, nicht jedoch für Fälle, in welchen dies auf schwankende Reibbedingungen zwischen Bremsbelägen und Bremsscheibe einer einzelnen Bremsanlage zurückzuführen ist, die sich dann in einem entsprechenden schwankenden zeitlichen Verlauf der Ist-Bremskraft äußern. Wenn beispielsweise die Fläche einer Bremsscheibe in Umfangsrichtung gesehen d.h. bezogen auf Bremsflächensegmente unterschiedliche Reibverhältnisse aufgrund von geometrischen Abweichungen der Reibfläche von einer ideal ebenen Fläche oder aufgrund unterschiedlicher Oberflächenrauhigkeiten aufweist, so würde eine Bremskraftregelung nach dem oben genannten Stand der Technik während mehrerer Umdrehung der Bremsscheibe ständig nachregeln. Weiterhin ist für Schienenfahrzeuge mit wenigstens einer Bremsanlage je Achse, zwei Achsen je Drehgestell, zwei Drehgestellen je Wagen und mehreren Wagen je Zug in der Regel eine relativ große Anzahl von einzelnen Bremsanlagen vorhanden, bei welchen die Reibbedingungen zwischen Bremsbelägen und Bremsscheiben jeweils schwanken können, so dass eine Bremskraftregelung des Stands der Technik an jeder einzelnen Bremsanlage ständig nachregeln würde. Dies führt allerdings zu einem unerwünscht hohen Energieverbrauch.

Der vorliegenden Erfindung liegt demgegenüber die Aufgabe zugrunde, ein Schienenfahrzeug mit einer Bremsanlage bzw. ein Verfahren zur Steuerung einer Bremsanlage eines Schienenfahrzeugs der eingangs erwähnten Art derart weiter zu entwickeln, dass die Bremsanlage mit einem relativ geringen Energieaufwand betrieben werden kann.

Diese Aufgabe wird erfindungsgemäß durch die Merkmale von Anspruch 1 und Anspruch 3 gelöst.

### Offenbarung der Erfindung

Es wird wenigstens eine Sensoreinrichtung vorgesehen, um den zeitlichen Verlauf wenigstens einer Schwankungen der Reibbedingungen zwischen dem einem Bremsaktuator zugeordneten Rad oder Radsatz und der Schiene und/oder zwischen der einem Bremsaktuator zugeordneten Bremsscheibe und dem bzw. den Bremsbelägen repräsentierenden Größe wie Raddrehgeschwindigkeit, Radumfangsbeschleunigung, Bremskraft, Bremsmoment oder Bremsdruck zu messen und um ein von der gemessenen Größe abhängiges Signal an eine Steuereinrichtung auszusteuern, welche derart ausgebildet ist, dass sie die von dem Bremsaktuator erzeugte Bremskraft abhängig von der Abweichung des zeitlichen Verlaufs der gemessenen Größe von einem vorgegebenen oder erwarteten zeitlichen Verlauf der Größe anpasst.

Mit anderen Worten soll ein gewisser Grad von Schwankungen der Reibbedingungen zwischen Rad oder Radsatz und Schiene und/oder zwischen Bremsscheibe und Bremsbelag toleriert, aber ab einem Grenzwert (erlaubte Abweichung) durch Anpassung der Bremskraft bzw. des Bremsmoments kompensiert werden.

Bei einem Schienenfahrzeug wirken sich an den gebremsten Achsen Schwankungen der Reibbedingungen zwischen Rad oder Radsatz und Schiene und/oder zwischen Bremsbelägen und Bremsscheibe rückkoppelnd auf den Zeitverlauf der von dem betreffenden oder zugeordneten Bremsaktuator erzeugten Bremskraft aus.

Vorzugsweise wird daher die Bremskraft in Umfangsrichtung der Bremsscheibe bzw. das Bremsmoment als die Schwankungen der Reibbedingungen zwischen Rad oder Radsatz und Schiene und/oder zwischen Bremsscheibe und den Bremsbelägen repräsentierende Größe herangezogen, als Zeitsignal gemessen und dann mit Hilfe der Steuereinrichtung ausgewertet. Bei konstanter Bremsanforderung deuten dann Abweichungen oder Schwankungen der Bremskraft bzw. des Bremsmoments an einem Bremsaktuator von einem erwarteten Zeitverlauf dieser Größen auf Schwankungen der Reibbedingungen zwischen dem zugeordneten Rad oder Radsatz und der Schiene und/oder zwischen der zugeordneten Bremsscheibe und den Bremsbelägen hin.

Die Sensoreinrichtung ist daher bevorzugt ausgebildet, um die Bremskraft bzw. das Bremsmoment an einem Bremsaktuator zu messen und die Steuereinrichtung, um die vom Bremsaktuator erzeugte Bremskraft abhängig von der Abweichung des zeitlichen Verlaufs der gemessenen Bremskraft von einem vorgegebenen zeitlichen Verlauf der Bremskraft anzupassen. Anstatt der Bremskraft kann natürlich auch das Bremsmoment überwacht werden.

Als Schwankungen der Reibbedingungen zwischen dem einem Bremsaktuator zugeordneten Rad oder Radsatz und der Schiene bzw. zwischen der einem Bremsaktuator zugeordneten Bremsscheibe und den Bremsbelägen repräsentierende Größe, deren zeitlicher Verlauf zu messen und zu vergleichen ist, ist jedoch auch jede andere Größe denkbar, auf welche sich die Schwankungen der Reibbedingungen auswirken bzw. durch welche diese mess- oder erkennbar ist. Bei Schienenfahrzeugen bzw. bei aus einzelnen Schienenfahrzeugen zusammen gesetzten Zügen kommen beispielsweise auch die Kräfte zwischen den einzelnen Schienenfahrzeugen (Zuglängskräfte) in Frage.

Die Verwendung der Bremskraft in Umfangsrichtung der Bremsscheibe bzw. des Bremsmoments an einem Bremsaktuator während einer Bremsanforderung als Schwankungen der Reibbedingungen zwischen dem zugeordneten Rad oder Radsatz und der Schiene und/oder zwischen der zugeordneten Bremsscheibe und den Bremsbelägen repräsentierende Größe hat den Vorteil, dass Bremsanlagen von Schienenfahrzeugen meist ohnehin mit einer Bremskraftregelung und damit mit einer entsprechenden Sensorik ausgerüstet sind, wie in der DE 102 45 207 C1 beschrieben wird. Dann können die ohnehin gemessenen zeitlichen Verläufe der Bremskraft und/oder des Bremsmoments an einem Bremsaktuator gleichzeitig als repräsentierende Größen oder als Gradmesser für das Auftreten von Schwankungen der Reibbedingungen zwischen dem zugeordneten Rad oder Radsatz und der Schiene und/oder zwischen der zugeordneten Bremsscheibe und den Bremsbelägen als Gradmesser für Schwankungen der Reibbedingungen herangezogen werden, ohne dass eine zusätzliche Sensorik notwendig wäre.

Durch die Anpassung der Bremskraft während einer Bremsanforderung abhängig von den gemessenen Schwankungen der Reibbedingungen wird dann der Anpressdruck der Bremsbeläge an die Bremsscheibe bzw. die an am Radumfang wirksame Bremskraft verändert. Besonders bevorzugt wird dabei die Bremskraft gegenüber einer der jeweiligen Bremsanforderung entsprechenden Soll-Bremskraft etwas erhöht, um ungünstige Reibbedingungen wie beispielsweise einen zu niedrigen, durch Umweltbedingungen verursachten Reibbeiwert zwischen Rad und Schiene und/oder zwischen Bremsscheibe und Bremsbelag durch eine erhöhte Bremskraft an dem betreffenden Bremsaktuator zu kompensieren.

Erfindungsgemäß umfasst die Bremsanlage mehrere Bremsaktuatoren, wobei die Steuereinrichtung derart ausgebildet ist, dass sie, falls bei einem Bremsaktuator die Abweichung des zeitlichen Verlaufs der gemessenen Größe von einem vorgegebenen oder erwarteten zeitlichen Verlauf der Größe größer als eine erlaubte Abweichung ist, die Bremskraft bei dem einen Bremsaktuator vergrößert und zur Kompensation die durch einen weiteren Bremsaktuator, bei welchem die Abweichung des zeitlichen Verlaufs der gemessenen Größe von einem vorgegebenen oder erwarteten zeitlichen Verlauf der Größe kleiner als die erlaubte Abweichung ist, erzeugte Bremskraft derart reduziert wird, dass die Summe der auf diese Weise erhaltenen Ist-Bremskräfte der Bremsaktuatoren einer der Bremsanforderung entsprechenden Soll-Gesamtbremskraft entspricht.

In diesem Fall führt also eine Erhöhung der Bremskraft bzw. des Bremsmoments gegenüber der Bremsanforderung an einem Bremsaktuator mit ungünstigen oder nicht mehr tolerierbaren Schwankungen der Reibbedingungen zwischen zugeordnetem Rad oder Radsatz und Schiene und/oder zwischen der zugeordneten Bremsscheibe und den Bremsbelägen nicht zu einer Überbremsung, weil dann durch wenigstens einen weiteren Bremsaktuator, bei welchem keine oder tolerierbare Schwankungen der Reibbedingungen zwischen dem zugeordneten Rad oder Radsatz und Schiene und/oder zwischen der zugeordneten Bremsscheibe und den Bremsbelägen vorliegen, eine gegenüber der Bremsanforderung derart geringere Bremskraft bzw. ein derart geringeres Bremsmoment erzeugt wird, dass die Gesamt-Bremskraft bzw. das Gesamt-Bremsmoment der Soll-Gesamtbremskraft bzw. dem Soll-Gesamtbremsmoment entspricht. Die Summe der derart erzeugten Bremsmomente an verschiedenen Bremsaktuatoren bleibt daher unverändert.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine schematische Seitendarstellung einer Scheibenbremsanlage eines Schienenfahrzeugs gemäß einer bevorzugten Ausführungsform der Erfindung;
- Fig.2: ein Flussdiagramm einer Bremskraft- oder Bremsmomentenanpassung zur Kompensation von Schwankungen der Reibbedingungen zwischen Rad oder Radsatz und Schiene bzw. zwischen Bremsscheibe und Bremsbelägen gemäß einer bevorzugten Ausführungsform der Erfindung.

### Beschreibung des Ausführungsbeispiels

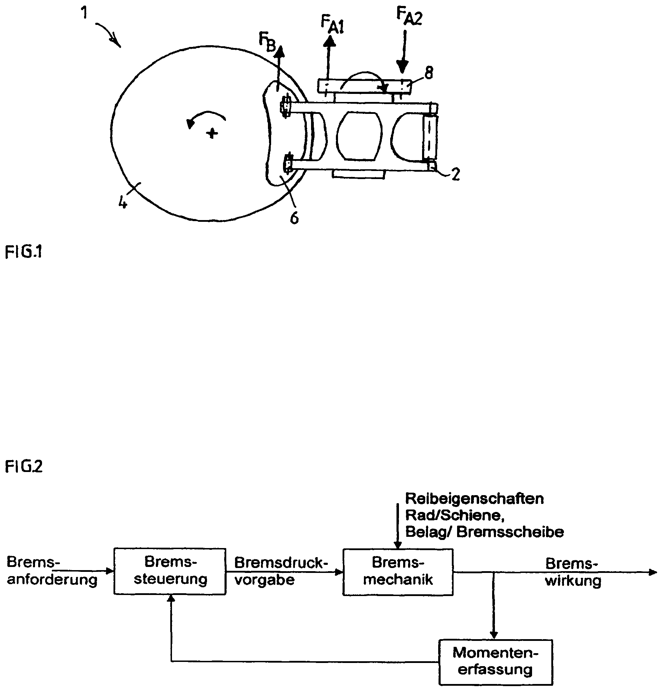

In Fig.1 ist eine Scheibenbremsanlage 1 eines Schienenfahrzeugs gemäß einer bevorzugten Ausführungsform der Erfindung gezeigt, wie sie grundsätzlich beispielsweise auch aus der DE 102 45 207 C1 bekannt ist und im folgenden deshalb nur kurz beschrieben wird.

Die Scheibenbremsanlage 1 beinhaltet als Bremsaktuator oder Bremszuspanneinrichtung eine Bremszangeneinheit 2 mit einer Betriebsbremseinheit und einer hier nicht betrachteten Speicherbremseinheit. Die Bremszangeneinheit 2 umfasst eine Bremsscheibe 4, welche mit beispielsweise zwei Bremsbelägen 6 in bekannter Weise zusammen wirkt, von welchen in der Seitenansicht von Fig.1 nur einer zu sehen ist. Die Bremszangeneinheit 2 wird bevorzugt pneumatisch betätigt, zur Erzeugung einer in Umfangsrichtung der Bremsscheibe 4 wirkenden Bremskraft F_{B} auf eine Bremsanforderung hin. Alternativ könnte die Bremszangeneinheit 2 natürlich auch in anderer Weise druckmittelbetätigt, beispielsweise hydraulisch oder auch elektrisch betätigt werden.

Da die Bremszangeneinheit 2 über einen Halter 8 an einem hier nicht gezeigten Drehgestell des Schienenfahrzeugs abgestützt ist, wirkt an dem Halter 8 ein Reaktionsmoment M_{A} bzw. Reaktionskräfte F_{A1}, F_{A2} in voneinander beabstandeten Befestigungsstellen des Halters 8 am Drehgestell, welche mittels einer Kraft messenden Sensorik wie beispielsweise Dehnmessstreifen an entsprechenden Verbindungsbauteilen zwischen dem Halter 8 und dem Drehgestell messbar sind. Das Schienenfahrzeug umfasst bevorzugt mehrere Drehgestelle mit jeweils mehreren solcher Bremsaktuatoren bzw. Bremszangeneinheiten 2, so dass die von wenigstens einigen dieser Bremszangeneinheiten 2 erzeugten Bremskräfte gemessen und in einer hier nicht gezeigten Steuereinrichtung ausgewertet werden können. Von den beispielsweise identisch aufgebauten Bremszangeneinheiten 2 des Schienenfahrzeugs ist in Fig.1 stellvertretend nur eine gezeigt.

Insbesondere dient die einer Bremszangeneinheit 2 zugeordnete Sensoreinrichtung dazu, um den zeitlichen Verlauf wenigstens einer Schwankungen der Reibbedingungen zwischen Rad und Schiene und/oder zwischen Bremsscheibe 4 und Bremsbelag 6 repräsentierenden Größe wie Raddrehgeschwindigkeit, Radumfangsbeschleunigung, Bremskraft, Bremsmoment oder Bremsdruck zu messen und um ein von dem gemessenen zeitlichen Verlauf abhängiges Signal an eine Steuereinrichtung auszusteuern, welche derart ausgebildet ist, dass sie die von der dem Rad oder dem Radsatz und/oder der Bremsscheibe und den Bremsbelägen zugeordnete Bremszangeneinheit 2 erzeugte Bremskraft abhängig von der Abweichung des zeitlichen Verlaufs der gemessenen Größe von einem vorgegebenen oder erwarteten zeitlichen Verlauf der Größe anpasst.

Als eine solche Größe kommt beispielsweise die Raddrehgeschwindigkeit, die Radumfangsbeschleunigung, die Bremskraft, das Bremsmoment M_{A} oder auch der Bremsdruck bei einer pneumatisch betätigten Bremszangeneinheit in Frage. Bei elektrisch betätigten Bremszangeneinheiten 2 könnte die Größe beispielsweise auch der Betätigungsstrom sein.

Vorzugsweise wird die Bremskraft in Umfangsrichtung der Bremsscheibe 4 bzw. das Bremsmoment M_{A} einer Bremszangeneinheit 2 während einer Bremsanforderung als die Schwankungen der Reibbedingungen zwischen dem der Bremszangeneinheit 2 zugeordneten Rad oder dem der der Bremszangeneinheit 2 zugeordneten Radsatz und der Schiene und/oder zwischen der Bremszangeneinheit 2 zugeordneten Bremsscheibe 4 und den Bremszangeneinheit 2 zugeordneten Bremsbelägen 6 repräsentierende Größe herangezogen, als Zeitsignal bzw. zeitlicher Verlauf über eine bestimmten vorgegebenen Zeitraum gemessen und dann mit Hilfe der Steuereinrichtung (Bremsteuerung) ausgewertet.

Mit anderen Worten wird in diesem Fall die Bremskraft bzw. das Bremsmoment bzw. der zeitliche Verlauf der betreffenden Größe gemessen und dann die von der zugeordneten Bremszangeneinheit 2 erzeugte Bremskraft bzw. das Bremsmoment abhängig von der Abweichung des zeitlichen Verlaufs der gemessenen Bremskraft von einem vorgegebenen oder erwarteten zeitlichen Verlauf der Bremskraft angepasst. Anstatt der Bremskraft kann natürlich auch das Bremsmoment überwacht werden.

Auch können anstatt nur einer Größe auch mehrere, Schwankungen der Reibbedingungen zwischen Rad oder Radsatz und Schiene und/oder zwischen Bremsscheibe 4 und Bremsbelag 6 repräsentierende und der betreffenden Bremszangeneinheit 2 zugeordnete Größen parallel überwacht werden. Bei konstanter Bremsanforderung deuten dann Änderungen oder Schwankungen im zeitlichen Verlauf der gemessenen Bremskraft bzw. des gemessenen Bremsmoments M_{A} bzw. Abweichungen vom erwarteten Zeitverlauf auf Schwankungen der Reibbedingungen zwischen dem der betreffenden Bremszangeneinheit 2 zugeordneten Rad oder Radsatz und der Schiene und/oder zwischen der Bremsscheibe 4 und den Bremsbelägen 6 an der betreffenden Bremszangeneinheit 2 hin.

Wie aus Fig.2 am besten hervorgeht, werden daher die zeitlichen Verläufe der Bremskraft bzw. des Bremsmoments M_{A} (Momentenerfassung) an einer Bremszangeneinheit 2 gemessen, wobei die Steuereinrichtung (Bremssteuerung) das von der betreffenden Bremszangeneinheit 2 erzeugte Bremsmoment M_{A} abhängig von der Abweichung des gemessenen, unter Umständen durch Schwankungen der Reibbedingungen zwischen dem zugeordneten Rad oder Radsatz und der Schiene und/oder zwischen der zugeordneten Bremsscheibe 4 und den Bremsbelägen 6 beeinflussten Zeitverlaufs des Bremsmoments M_{A} von einem vorgegebenen oder erwarteten Zeitverlauf des Bremsmoments (Bremsanforderung) an dieser Bremszangeneinheit 2 beispielsweise mittels einer Bremsdruckvorgabe für die vorzugsweise pneumatisch betätigte Bremszangeneinheit 2 anpasst. Auf die Bremsmechanik der Bremszangeneinheit 2 wirken dann schwankende Reibeigenschaften zwischen den zugeordneten Rädern und der Schiene und/oder zwischen der Bremsscheibe 4 und den Bremsbelägen 6 als Störgrößen ein.

In der Praxis bevorzugt umfasst die Bremsanlage eines Schienenfahrzeugs mehrere Bremsaktuatoren bzw. Bremszangeneinheiten 2, wobei die Steuereinrichtung dann bevorzugt derart ausgebildet ist, dass sie, falls bei einer der Bremszangeneinheiten 2 die Abweichung des gemessenen Zeitverlaufs (vorzugsweise des gemessenen Zeitverlaufs des Bremsmoments) von einem vorgegebenen oder einem erwarteten Zeitverlauf größer als eine erlaubte Abweichung ist (d.h. es treten an dieser einen Bremszangeneinheit 2 nicht tolerierbare Schwankungen der Reibeigenschaften auf), die Bremskraft bzw. das Bremsmoment bei dieser einen Bremszangeneinheit 2 vergrößert und zur Kompensation die bzw. das durch eine weitere Bremszangeneinheit 2, bei welcher die Abweichung des gemessenen Zeitverlaufs von dem vorgegebenen oder erwarteten Zeitverlauf kleiner als die erlaubte Abweichung ist (d.h. es treten an dieser weiteren Bremszangeneinheit 2 tolerierbare Schwankungen der Reibeigenschaften auf), erzeugte Bremskraft bzw. erzeugte Bremsmoment derart reduziert wird, dass die Summe der auf diese Weise erhaltenen Ist-Bremskräfte bzw. Ist-Bremsmomente aller oder wenigstens einiger Bremszangeneinheiten 2 einer der Bremsanforderung entsprechenden Soll-Gesamtbremskraft bzw. einem der Bremsanforderung entsprechenden Soll-Gesamtbremsmoment entspricht.

In diesem Fall führt beispielsweise eine Erhöhung der Bremskraft bzw. des Bremsmoments an der einen Bremszangeneinheit 2 gegenüber der Bremsanforderung aufgrund störender oder nicht tolerierbarer Schwankungen der Reibbedingungen zwischen dem zugeordneten Rad oder Radsatz und der Schiene und/oder zwischen der zugeordneten Bremsscheibe 4 und den zugeordneten Bremsbelägen 6 nicht zu einer Überbremsung des Schienenfahrzeugs, weil dann durch wenigstens eine weitere Bremszangeneinheit 2, bei welcher keine oder tolerierbare Schwankungen der Reibbedingungen zwischen dem zugeordneten Rad oder Radsatz und der Schiene und/oder zwischen der zugeordneten Bremsscheibe 4 und dem zugeordneten Bremsbelag 6 auftreten, eine gegenüber der Bremsanforderung derart geringere Bremskraft bzw. ein derart geringeres Bremsmoment erzeugt wird, dass die Gesamt-Bremskraft bzw. das Gesamt-Bremsmoment der Soll-Gesamtbremskraft bzw. dem Soll-Gesamtbremsmoment entspricht.

### Bezugszeichenliste

- 1: Bremsanlage
- 2: Bremszangeneinheit
- 4: Bremsscheibe
- 6: Bremsbeläge
- 8: Halter

## Patentansprüche

1. Schienenfahrzeug beinhaltend eine Bremsanlage (1) mit wenigstens einem einem Rad oder einem Radsatz zugeordneten Bremsaktuator (2) umfassend wenigstens eine Bremsscheibe (4) und wenigstens einen mit dieser zusammen wirkenden Bremsbelag (6) zur Erzeugung einer Bremskraft auf eine Bremsanforderung hin, wobei wenigstens eine Sensoreinrichtung vorgesehen ist, um den zeitlichen Verlauf wenigstens einer Schwankungen der Reibbedingungen zwischen dem dem Bremsaktuator (2) zugeordneten Rad oder Radsatz und der Schiene und/oder zwischen der dem Bremsaktuator (2) zugeordneten Bremsscheibe (4) und dem wenigstens einen Bremsbelag (6) repräsentierenden Größe wie Raddrehgeschwindigkeit, Radumfangsbeschleunigung, Bremskraft, Bremsmoment oder Bremsdruck zu messen und um ein von der gemessenen Größe abhängiges Signal an eine Steuereinrichtung auszusteuern, wobei die Steuereinrichtung derart ausgebildet ist, dass sie die von dem Bremsaktuator (2) erzeugte Bremskraft abhängig von der Abweichung des zeitlichen Verlaufs der gemessenen Größe von einem vorgegebenen oder erwarteten zeitlichen Verlauf der Größe anpasst, **dadurch gekennzeichnet, dass** die Bremsanlage mehrere Bremsaktuatoren (2) umfasst und die Steuereinrichtung derart ausgebildet ist, dass sie, falls bei einem Bremsaktuator (2) die Abweichung des zeitlichen Verlaufs der gemessenen Größe von einem vorgegebenen oder erwarteten zeitlichen Verlauf der Größe größer als eine erlaubte Abweichung ist, die Bremskraft bei dem einen Bremsaktuator (2) vergrößert und zur Kompensation die durch einen weiteren Bremsaktuator (2), bei welchem die Abweichung des zeitlichen Verlaufs der gemessenen Größe von einem vorgegebenen oder erwarteten zeitlichen Verlauf der Größe kleiner als die erlaubte Abweichung ist, erzeugte Bremskraft derart reduziert wird, dass die Summe der auf diese Weise erhaltenen Ist-Bremskräfte der Bremsaktuatoren (2) einer der Bremsanforderung entsprechenden Soll-Gesamtbremskraft entspricht.

2. Schienenfahrzeug nach Anspruch 1, **dadurch gekennzeichnet, dass** die Schwankungen der Reibbedingungen zwischen dem Rad oder dem Radsatz und der Schiene und/oder zwischen Bremsscheibe (4) und Bremsbelag (6) repräsentierende Größe die vom zugeordneten Bremsaktuator (2) erzeugte Bremskraft oder das von dem zugeordneten Bremsaktuator (2) erzeugte Bremsmoment ist.

3. Verfahren zur Steuerung einer Bremsanlage (1) eines Schienenfahrzeugs, mit wenigstens einem einem Rad oder einem Radsatz zugeordneten Bremsaktuator (2) umfassend wenigstens eine Bremsscheibe (4) und wenigstens einen mit dieser zusammen wirkenden Bremsbelag (6) zur Erzeugung einer Bremskraft auf eine Bremsanforderung hin, beinhaltend folgende Schritte:
a) Messen des zeitlichen Verlaufs wenigstens einer Schwankungen der Reibbedingungen zwischen dem dem Bremsaktuator (2) zugeordneten Rad oder Radsatz und der Schiene und/oder zwischen der zugeordneten Bremsscheibe (4) und dem wenigstens einen Bremsbelag (6) repräsentierenden Größe wie Raddrehgeschwindigkeit, Radumfangsbeschleunigung, Bremskraft, Bremsmoment oder Bremsdruck,
b) Anpassen der von dem Bremsaktuator (2) erzeugten Bremskraft abhängig von der Abweichung des zeitlichen Verlaufs der gemessenen Größe von einem vorgegebenen oder erwarteten zeitlichen Verlauf der Größe, **dadurch gekennzeichnet, dass**
c) falls bei einem Bremsaktuator (2) die Abweichung des zeitlichen Verlaufs der gemessenen Größe von einem vorgegebenen oder erwarteten zeitlichen Verlauf der Größe größer als eine erlaubte Abweichung ist, die Bremskraft bei dem einen Bremsaktuator (2) vergrößert und zur Kompensation die durch einen weiteren Bremsaktuator (2), bei welchem die Abweichung des zeitlichen Verlaufs der gemessenen Größe von einem vorgegebenen oder erwarteten zeitlichen Verlauf der Größe kleiner als die erlaubte Abweichung ist, erzeugte Bremskraft derart reduziert wird, dass die Summe der auf diese Weise erhaltenen Ist-Bremskräfte der Bremsaktuatoren (2) einer der Bremsanforderung entsprechenden Soll-Gesamtbremskraft entspricht.

4. Verfahren nach Anspruch 3, **dadurch gekennzeichnet, dass** die die Schwankungen der Reibbedingungen zwischen Rad oder Radsatz und Schiene und/oder zwischen Bremsscheibe (4) und Bremsbelag (6) repräsentierende Größe vom Bremsaktuator (2) erzeugte Bremskraft oder das Bremsmoment ist.

## Claims

1. Rail vehicle comprising a brake system (1), having at least one brake actuator (2) which is assigned to a wheel or a wheel set and comprises at least one brake disk (4) and at least one brake lining (6) which interacts with the former in order to generate a braking force in response to a braking demand, wherein at least one sensor device is provided for measuring the time profile of at least one variable, such as a wheel rotational speed, wheel circumferential acceleration, braking force, braking torque or brake pressure, which represents fluctuations in the friction conditions between the wheel or wheel set assigned to the brake actuator (2) and the rail and/or between the brake disk (4) assigned to the brake actuator (2) and the at least one brake lining (6), and for modulating a signal which is dependent on the measured variable and is output to a control device, wherein the control device is embodied in such a way that it adapts the braking force generated by the brake actuator (2) as a function of the deviation of the time profile of the measured variable from a predefined or expected time profile of the variable, **characterized in that** the brake system comprises a plurality of brake actuators (2), and the control device is embodied in such a way that, if the deviation of the time profile of the measured variable from a predefined or expected time profile of the variable is greater than a permitted deviation at one brake actuator (2), the braking force at the one brake actuator (2) is increased and, for the purpose of compensation, the braking force which is generated by a further brake actuator (2) at which the deviation of the time profile of the measured variable from a predefined or expected time profile of the variable is smaller than the permitted deviation is reduced in such a way that the sum of the actual braking forces, obtained in this way, of the brake actuators (2) corresponds to an overall setpoint braking force corresponding to the braking demand.

2. Rail vehicle according to Claim 1, **characterized in that** the variable which represents the fluctuations in the friction conditions between the wheel or the wheel set and the rail and/or between the brake disk (4) and the brake lining (6) is the braking force generated by the assigned brake actuator (2) or the braking torque generated by the assigned brake actuator (2).

3. Method for controlling a brake system (1) of a rail vehicle, having at least one brake actuator (2) which is assigned to a wheel or a wheel set and comprises at least one brake disk (4) and at least one brake lining (6) which interacts with the former in order to generate a braking force in response to a braking demand, comprising the following steps:
a) measurement of the time profile of at least one variable, such as wheel rotational speed, wheel circumferential acceleration, braking force, braking torque or brake pressure, which represents fluctuations in the friction conditions between the wheel or wheel set assigned to the brake actuator (2) and the rail and/or between the assigned brake disk (4) and the at least one brake lining (6),
b) adaptation of the braking force generated by the brake actuator (2) as a function of the deviation of the time profile of the measured variable from a predefined or expected time profile of the variable, **characterized in that**
c) if the deviation of the time profile of the measured variable from a predefined or expected time profile of the variable is greater than a permitted deviation at one brake actuator (2), the braking force at the one brake actuator (2) is increased and, for the purpose of compensation, the braking force which is generated by a further brake actuator (2) at which the deviation of the time profile of the measured variable from a predefined or expected time profile of the variable is smaller than the permitted deviation is reduced in such a way that the sum of the actual braking forces, obtained in this way, of the brake actuators (2) corresponds to an overall setpoint braking force corresponding to the braking demand.

4. Method according to Claim 3, **characterized in that** the variable which represents the fluctuations in the friction conditions between the wheel or wheel set and the rail and/or between the brake disk (4) and the brake lining (6) is the braking force generated by the brake actuator (2) or the braking torque.

## Revendications

1. Véhicule ferroviaire comportant un système (1) de freinage, ayant au moins un actionneur (2) de frein associé à une roue ou à un essieu, comprenant au moins un disque (4) de frein et au moins une garniture (6) de frein agissant ensemble avec celui-ci pour produire une force de freinage sur une demande de freinage, dans lequel il est prévu au moins un dispositif formant capteur pour mesurer la variation en fonction du temps d'au moins une fluctuation des conditions de frottement entre la roue ou l'essieu associé à l'actionneur (2) de frein et le rail et/ou entre le disque (4) de frein associé à l'actionneur (2) de frein et la grandeur représentant au moins une garniture (6) de frein, comme la vitesse de rotation de la roue, l'accélération périphérique de la roue, la force de freinage, le couple de freinage ou la pression de freinage et pour émettre, vers un dispositif de commande, un signal, qui dépend de la grandeur mesurée, le dispositif de commande étant constitué de manière à adapter la force de freinage produite par l'actionneur (2) de frein, en fonction de l'écart de la courbe en fonction du temps de la grandeur mesurée à une courbe en fonction du temps donnée à l'avance ou escomptée de la grandeur,
**caractérisé en ce que** le système de freinage comprend plusieurs actionneurs (2) de frein et le dispositif de commande est constitué de manière à augmenter, pour un actionneur (2) de frein, l'écart de la courbe en fonction du temps de la grandeur mesurée à une courbe en fonction du temps donnée à l'avance ou escomptée de la grandeur est plus grand qu'un écart autorisé, la force de freinage pour le un actionneur (2) de frein et, pour la compensation, à réduire la force de frein produite par un autre actionneur (2) de frein, pour lequel l'écart de la courbe en fonction du temps de la grandeur mesurée à une courbe en fonction du temps donnée à l'avance ou escomptée de la grandeur est plus petit que l'écart autorisé, de manière à ce que la somme des forces de freinage réelles obtenue ainsi des actionneurs (2) de frein corresponde à une force de frein d'ensemble de consigne correspondant à la demande de freinage.

2. Véhicule ferroviaire suivant la revendication, **caractérisé en ce que** les fluctuations des conditions de frottement, entre la roue ou l'essieu et le rail et/ou entre le disque (4) de frein et la grandeur représentant la garniture (6) de frein, est la force de freinage produite par l'actionneur (2) de frein associé ou le couple de freinage produit par l'actionneur (2) de frein associé.

3. Procédé de commande d'un système (1) de freinage d'un véhicule ferroviaire ayant au moins un actionneur (2) de frein associé à une roue ou à un essieu, comprenant au moins un disque (4) de frein et au moins une garniture (6) de frein agissant ensemble avec celui-ci pour produire une force de freinage sur une demande de freinage, comportant les stades suivants :
a) on mesure la courbe en fonction du temps d'au moins une fluctuation des conditions de frottement entre la roue ou l'essieu associé à l'actionneur (2) de frein et de rail et la grandeur représentant au moins une garniture (6) de frein, comme la vitesse de la roue, l'accélération périphérique de la roue, la force de freinage, le couple de freinage ou la pression de freinage,
b) on adapte la force de freinage produite par l'actionneur (2) de frein en fonction de l'écart de la courbe en fonction du temps de la grandeur mesurée à une courbe en fonction du temps donnée à l'avance ou escomptée de la grandeur, **caractérisé en ce que**
c) si, pour un actionneur (2) de frein, l'écart de la courbe en fonction du temps de la grandeur mesurée à une courbe en fonction du temps donnée à l'avance ou escomptée de la grandeur est plus grand qu'un écart autorisé, on augmente la force de freinage pour le un actionneur (2) de frein et, pour la compensation, on réduit la force de frein produite par un autre actionneur (2) de frein, pour lequel l'écart de la courbe en fonction du temps de la grandeur mesurée à une courbe en fonction du temps donnée à l'avance ou escomptée de la grandeur est plus petit que l'écart autorisé, de manière à ce que la somme des forces de freinage réelles obtenue ainsi des actionneurs (2) de frein corresponde à une force de frein d'ensemble de consigne correspondant à la demande de freinage.

4. Procédé suivant la revendication 3, **caractérisé en ce que** les fluctuations des conditions de frottement entre la roue ou l'essieu et le rail et/ou entre le disque (4) de frein et la grandeur représentant la garniture (6) de frein est la force de freinage ou le couple de freinage produit par l'actionneur (2) de frein.
